# EUROPÄISCHE PATENTSCHRIFT

(11) **EP 0 865 398 B1**
(45) Veröffentlichungstag und Bekanntmachung des Hinweises auf die Patenterteilung: **03.07.2002**
(21) Anmeldenummer: 96939907.0
(22) Anmeldetag: 22.11.1996
(51) Int. Cl.: B65H 1/24, G06K 13/10

(54) **VORRICHTUNG UND VERFAHREN ZUM VEREINZELN VON BLATTGUT AUS EINEM STAPEL**
DEVICE AND PROCESS FOR SEPARATING A SHEET ARTICLE FROM A STACK
DISPOSITIF ET PROCEDE POUR SEPARER UN ARTICLE SOUS FORME DE FEUILLE D'UNE PILE

(30) Priorität: 23.11.1995 DE 19543634
(43) Veröffentlichungstag der Anmeldung: 23.09.1998
(73) Patentinhaber: Giesecke & Devrient GmbH, 81677 München (DE)
(72) Erfinder: LEUTHOLD, Karl, D-81377 München (DE)
(74) Vertreter: Höhfeld, Jochen
(86) Internationale Anmeldenummer: EP9605174
(87) Internationale Veröffentlichungsnummer: WO9719011

(56) Entgegenhaltungen:
- EP-A- 0 339 178
- US-A- 4 790 525
- PATENT ABSTRACTS OF JAPAN vol. 011, no. 166 (M-593), 28.Mai 1987 & JP 61 295934 A (TOSHIBA CORP), 26.Dezember 1986,
- PATENT ABSTRACTS OF JAPAN vol. 009, no. 268 (M-424), 25.Oktober 1985 & JP 60 112547 A (HITACHI SEISAKUSHO KK), 19.Juni 1985,
- PATENT ABSTRACTS OF JAPAN vol. 95, no. 009 & JP 07 237759 A (HITACHI LTD;OTHERS: 01), 12.September 1995,
- PATENT ABSTRACTS OF JAPAN vol. 18, no. 13 (M-1539), 11.Januar 1994 & JP 05 254675 A (OKI ELECTRIC IND CO. LTD.), 5.Oktober 1993,
- PATENT ABSTRACTS OF JAPAN vol. 17, no. 555 (M-1492), 6.Oktober 1993 & JP 05 155515 A (ISHIDA SCALES MFG. CO. LTD.), 22.Juni 1993,
- XEROX DISCLOSURE JOURNAL, Bd. 20, Nr. 4, 1.Juli 1995, Seiten 345-347, XP000517610 ACQUAVIVA T: "STACK HEIGHT SENSOR FOR JOB COMPLETION DETECTION"

## Beschreibung

Die Erfindung betrifft eine Vorrichtung und ein Verfahren zum Vereinzeln von Blattgut, wie z. B. Banknoten, aus einem Stapel.

Eine solche Vorrichtung ist beispielsweise aus der DE-OS 34 47 777 bekannt. Mittels einer beweglichen Andruckplatte wird ein auf der Andruckplatte liegender Stapel einer Abzugseinrichtung zugeführt. Die Abzugseinrichtung weist unter anderem eine Vorschubeinrichtung, eine Rückhalteeinrichtung, eine Vereinzelungswalze und eine Rückhaltewalze auf. Zur Vereinzelung des Blattguts wird die Andruckplatte in Richtung der Abzugseinrichtung bewegt, bis der Stapel mit leichtem Druck an die Vorschubeinrichtung angedrückt wird. Danach wird das jeweils oberste Blatt des Stapels mittels der Vorschubeinrichtung in Richtung der Vereinzelungswalze bewegt, die dann dieses Blatt aus dem Stapel vereinzelt.

Ein Nachteil der Vorrichtung besteht darin, daß der leichte Druck, mit dem der Stapel an die Vorschubeinrichtung angedrückt wird, während der gesamten Vereinzelung des Stapels nicht sehr konstant gehalten werden kann. Dies gilt insbesondere für Stapel von abgenutztem Blattgut, wie z. B. welligen oder an verschiedenen Stellen geknickten Bankoten.

Einen weitere Vorrichtung ist aus der JP 61-295934 bekannt. Mittels einer beweglichen Andruckplatte wird ein auf der Andruckplatte liegender Stapel einer Abzugseinrichtung zugeführt. Die Andruckplatte fährt mit dem Blattstapel nach oben, bis ein Positionsdetektor durch ein entsprechendes Signal diese Aufwärtsbewegung stoppt. Nach dem Stop wird mittels einer Luftdüse eine Luftströmung durch den Blattstapel hindurch erzeugt, und es wird getestet, ob der Stapel für die Luftströmung durchlässig ist. Im Falle, daß eine Durchlässigkeit festgestellt wird, wird die Andruckplatte soweit angehoben, bis der Stapel für die Luftströmung undurchlässig ist. Daraufhin wird der Anpreßdruck wieder gelockert und das obenliegende Blatt wird vereinzelt.

Ausgehend davon liegt der Erfindung die Aufgabe zugrunde, eine Vorrichtung sowie ein Verfahren zum Vereinzeln von Blattgut vorzuschlagen, bei der der Blattgutstapel während der gesamten Vereinzelung mit einem optimalen Druck an die Vorschubeinrichtung der Abzugseinrichtung angedrückt wird.

Diese Aufgabe wird durch die Merkmale des Hauptanspruchs gelöst.

Der Grundgedanke der Erfindung besteht im wesentlichen darin, die Dichte des Stapels mittels eines Dichtesensors zumindest im Bereich der Abzugseinrichtung kontinuierlich während der Vereinzelung zu bestimmen und mittels einer Regeleinrichtung den Abstand zwischen der Andruckplatte und der Abzugseinrichtung in Abhängigkeit der bestimmten Dichte optimal anzupassen. Die bestimmte Dichte des Banknotenstapels im Bereich der Abzugseinrichtung ist hierbei ein Maß für den Druck, mit dem der Stapel an die Abzugseinrichtung angedrückt wird.

Ein Vorteil der Vorrichtung besteht darin, daß die bestimmte Dichte im wesentlichen vom Zustand der obersten Blätter des Stapels abhängt. Der zu dieser Dichte proportionale Andruck kann somit während der gesamten Vereinzelung des Stapels konstant gehalten werden. Es ist hierbei unerheblich, wie viele Blätter sich noch im Stapel befinden oder wie groß der absolute Abstand zwischen der Andruckplatte und der Abzugseinrichtung ist. Ist der Andruck des Stapels an die Abzugseinrichtung zu gering, so kann dieser leicht durch eine Verringerung des Abstands zwischen der Andruckplatte und der Abzugseinrichtung erhöht werden. Ist der Andruck zu hoch, so kann er durch Vergrößerung des Abstands verkleinert werden. Es ergibt sich somit ein dynamischer Regelkreis, der unabhängig vom Zustand oder der Dicke des Stapels einen konstanten Andruck des Stapels an die Abzugseinrichtung gewährleistet.

In einer bevorzugten Ausführungsform der Erfindung weist der Dichtesensor eine Blasluftdüse auf, die Luft zwischen die Blätter des Stapels bläst und die Blätter des Stapels zu Schwingungen anregt. Die Schwingungen der Blätter erzeugen Geräusche, die mittels eines Mikrofons detektiert werden. Aus diesen detektierten Geräuschen bestimmt die Regeleinrichtung die Dichte des Stapels.

Weitere Merkmale und Ausführungsformen der Erfindung ergeben sich aus den Unteransprüchen. Nachfolgend wird die Erfindung anhand der Figuren beschrieben. Es zeigen:
- Fig. 1: Prinzipskizze einer Ausführungsform der Erfindung,
- Fig. 2: Schnittdarstellung der Ausführungsform entlang des Schnitts A,
- Fig. 3: Schnittdarstellung der Ausführungsform entlang des Schnitts B,
- Fig. 4: Schnittdarstellung der Ausführungsform entlang des Schnitts C.

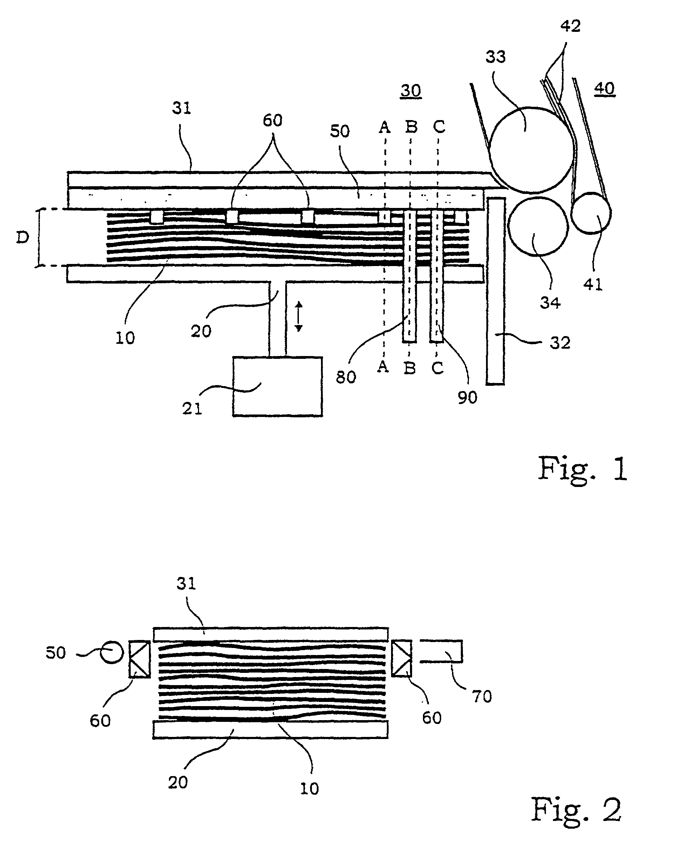

Die Fig. 1 zeigt eine Ausführungsform der Erfindung in einer Seitenansicht. Der Stapel 10 besteht aus einer Anzahl Blätter, die hier wellig dargestellt sind. Der Stapel 10 liegt auf einer beweglichen Andruckplatte 20, mittels der der Stapel 10 einer Abzugseinrichtung 30 zugeführt wird. Die Abzugseinrichtung 30 weist eine Vorschubeinrichtung 31, eine Rückhalteeinrichtung 32, eine Vereinzelungswalze 33 und eine Rückhaltewalze 34 auf.

Zur Vereinzelung des obersten Blattstapels 10 wird dieses durch die Vorschubeinrichtung 31, die beispielsweise als Luftleitplatte ausgeführt werden kann, in Richtung der Vereinzelungswalze 33 transportiert. Diese ergreift dann das oberste Blatt und zieht es vom Stapel 10 ab. Die dem obersten Blatt nachfolgenden Blätter des Stapels 10 werden von der Rückhalteeinrichtung 32 zurückgehalten. Für den Fall, daß von der Vorschubeinrichtung 31 mehrere Blätter in Richtung der Vereinzelungswalze 33 transportiert werden, ist zusätzlich die Rückhaltewalze 34 vorgesehen, die dann die dem obersten Blatt nachfolgenden Blätter wieder in den Stapel 10 zurücktransportiert.

Das von der Abzugseinrichtung 30 vereinzelte Blatt kann dann, wie hier beispielsweise dargestellt, an ein Transportsystem 40 übergeben werden. Dieses weist im wesentlichen Transportrollen 41 auf, mittels derer Transportriemen 42 bewegt werden. Zum Transport wird das Blattgut zwischen den Transportriemen 42 eingeklemmt.

Der Abstand D zwischen der Andruckplatte 20 und der Abzugseinrichtung 30 kann durch Hinauf- bzw. Herunterfahren der Andruckplatte 20 mittels einer Regeleinrichtung 21 verändert werden. Um den Abstand D während der gesamten Vereinzelung optimal anzupassen, wird während der Vereinzelung die Dichte des Stapels 10 zumindest im Bereich der Abzugseinrichtung 30 kontinuierlich bestimmt. Zur Bestimmung der Dichte sind hier verschiedene Ausführungsformen von Dichtesensoren gleichzeitig dargestellt. Im Normalfall genügt es selbstverständlich, einen der im folgenden vorgestellten Dichtesensoren auszuwählen.

Die Fig. 2 ist eine Prinzipskizze der Ausführungsform entlang des in Fig. 1 mit A bezeichneten Schnitts. Bei einer bevorzugten Ausführungsform des Dichtesensors wird mittels einer Blasdüse 50 Luft zwischen die Blätter des Stapels 10 geblasen. Durch diese eingeblasene Luft werden die Blätter des Stapels 10 zu Schwingungen angeregt. Ein Mikrofon 60 detektiert dann die durch die Schwingungen der Blätter entstehenden Geräusche. Das Mikrofon 60 wird bevorzugt auf derselben Seite des Stapels 10 angeordnet wie die Blasluftdüse 50. Auch eine Anordnung des Mikrofons 60 auf der gegenüberliegenden Seite des Stapels 10 ist möglich. Wie in Fig. 1 dargestellt, kann die Blasluftdüse über die gesamte Länge des Blattgutstapels 10 ausgeführt werden, so daß auch mehrere Mikrofone 60 zur Detektion der durch die Schwingungen der Blätter entstandenen Geräusche verwendet werden können.

Aus den von einem oder mehreren Mikrofonen 60 detektierten Geräuschen bestimmt die Regeleinrichtung 21 kontinuierlich die Dichte des Stapels 10. Abhängig von der bestimmten Dichte paßt die Regeleinrichtung 21 den Abstand D zwischen Andruckplatte 20 und Abzugseinrichtung 30 kontinuierlich so an, daß der Stapel 10 optimal an die Abzugseinrichtung 30 angedrückt wird.

In einer zweiten Ausführungsform weist der Dichtesensor wiederum eine Blasluftdüse 50 und einen Luftdrucksensor 70 auf. Die Blasluftdüse 50 und der Luftdrucksensor 70 sind auf gegenüberliegenden Seiten des Stapels 10 angeordnet. Der Luftdrucksensor 70 detektiert den Druck der durch den Stapel 10 tretenden Luft. Mittels der Regeleinrichtung 21 wird dann kontinuierlich die Dichte des Stapels 10 aus dem detektierten Druck bestimmt und der Abstand D optimal angepaßt. Auch hier ist es möglich, einen oder mehrere Luftdrucksensoren 70 zu verwenden. Die Anzahl bzw. die Ausdehnung der Luftdrucksensoren 70 kann für die Vorrichtung optimiert werden.

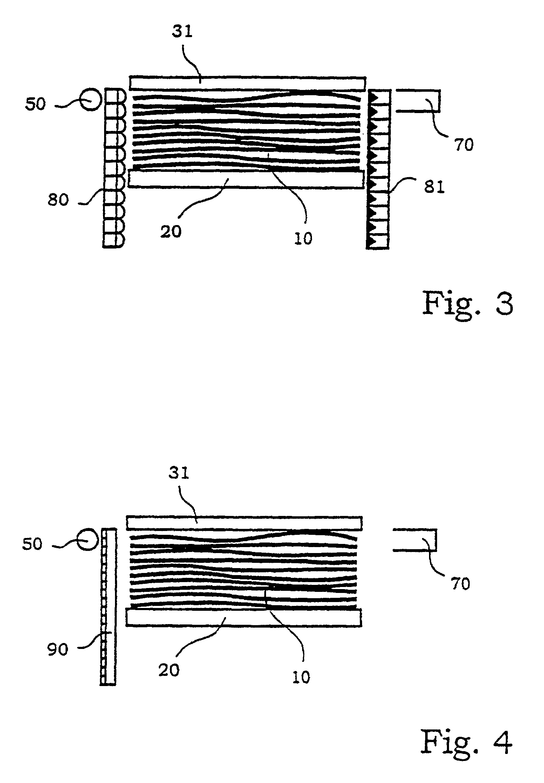

Die Fig. 3 ist eine Schnittdarstellung entlang des in Fig. 1 dargestellten Schnitts B und zeigt eine weitere Ausführungsform eines Dichtesensors. Dieser weist eine Lichtquelle 80 und einen Lichtsensor 81 auf, die auf gegenüberliegenden Seiten des Stapels 10 angeordnet sind. Zur Bestimmung der Dichte beleuchtet die Lichtquelle den Stapel 10 auf einer Seite und der Lichtsensor 81 detektiert das durch den Stapel 10 tretende Licht. Aus dem detektierten Licht wird dann die Dichte des Stapels 10 bestimmt und der Abstand D optimal angepaßt

Als Lichtquelle können neben einfachen Beleuchtungen wie z. B. Glühlampen oder LED's auch LED-Arrays verwendet werden. Der Lichtsensor kann beispielsweise eine Fotodiode, ein Fotodiodenarray oder ein CCD-Array aufweisen.

Durch die Verwendung beispielsweise eines LED-Arrays und eines Fotodiodenarray ist es möglich, die Dichte des Stapels 10 in verschiedenen Abschnitten des Stapels 10 zu bestimmen. Sollten beispielsweise in den unteren Abschnitten des Stapels 10 Dichten auftreten, die mit hoher Wahrscheinlichkeit zu einer Störung während der Vereinzelung führen werden, können frühzeitig Maßnahmen zur Beseitigung dieser Dichten getroffen werden. Verschiedene dieser Maßnahmen sind bereits aus dem Stand der Technik bekannt. Selbsverständlich können bei Bedarf auch die anderen oben beschriebenen Ausführungsformen eines Dichtesensors in Form eines Arrays ausgestaltet werden.

In der Fig. 4 ist eine Schnittdarstellung entlang des in Fig. 1 dargestellten Schnitts C gezeigt. In der hier dargestellten Ausführungsform eines Dichtesensors ist eine CCD-Kamera 90 vorgesehen, die ein Bild der Blattkanten des Stapels 10 erzeugt. Aus diesem Bild wird die Anzahl der Blattkanten im Bereich der Abzugseinrichtung 30 durch Abzählen bestimmt. Die Dichte des Stapels 10 ergibt sich aus Anzahl der Blattkanten pro Bereich.

Neben den zur Erzeugung des Bildes notwendigen CCD's kann die CCD-Kamera auch eine Beleuchtung enthalten, die die Blattkanten beleuchtet. Bevorzugt wird eine CCD-Zeilenkamera verwendet, die sich bei Bedarf auch entlang des gesamten Stapels 10 erstrecken kann, um beispielsweise auch Dichten in den unteren Abschnitten des Stapels 10 bestimmen zu können.

## Patentansprüche

1. Vorrichtung zum Vereinzeln von Blattgut, wie z. B. Banknoten, aus einem Stapel mit einer beweglichen Andruckplatte, auf der der Stapel aufliegt und mittels der der Stapel einer Abzugseinrichtung zugeführt wird, die jeweils das oberste Blatt des Stapels vereinzelt, **dadurch gekennzeichnet, daß**
- ein Dichtesensor (50, 60, 70, 80, 81) vorgesehen ist, der die Dichte des Stapels (10) zumindest im Bereich der Abzugseinrichtung (30) kontinuierlich während der Vereinzelung bestimmt, die als Maß für den Anpreßdruck des Blattguts an die Abzugseinrichtung (30) dient, und daß
- eine Regeleinrichtung (21) vorgesehen ist, die den Abstand (D) zwischen der Andruckplatte (20) und der Abzugseinrichtung (30) in Abhängigkeit der bestimmten Dichte so regelt, daß der Stapel (10) während der Vereinzelung mit einem konstanten Anpreßdruck an die Abzugseinrichtung (30) angedrückt wird.

2. Vorrichtung nach Anspruch 1, **dadurch gekennzeichnet, daß** der Dichtesensor (50, 60) mindestens die folgenden Einrichtungen aufweist:
- eine Blasluftdüse (50), die Luft zwischen die Blätter des Stapels (10) bläst und die Blätter des Stapels (10) zu Schwingungen anregt und
- ein Mikrofon (60), das die durch die Schwingungen der Blätter des Stapels (10) erzeugten Geräusche detektiert.

3. Vorrichtung nach Anspruch 1, **dadurch gekennzeichnet, daß** der Dichtesensor (50, 70) mindestens die folgenden Einrichtungen aufweist:
- eine Blasluftdüse (50), die auf einer Seite des Stapels (10) Luft zwischen die Blätter des Stapels (10) bläst und
- einen Luftdrucksensor (70), der auf der gegenüberliegenden Seite des Stapels (10) den Druck der durch den Stapel (10) tretenden Luft detektiert.

4. Vorrichtung nach Anspruch 1, **dadurch gekennzeichnet, daß** der Dichtesensor (80, 81) mindestens die folgenden Einrichtungen aufweist:
- eine Lichtquelle (80), die den Stapel (10) auf einer Seite beleuchtet und
- einen Lichtsensor (81), der das durch den Stapel (10) tretende Licht auf der gegenüberliegenden Seite des Stapels (10) detektiert.

5. Vorrichtung nach Anspruch 4, **dadurch gekennzeichnet, daß** die Lichtquelle (80) ein LED-Array aufweist.

6. Vorrichtung nach Anspruch 4, **dadurch gekennzeichnet, daß** der Lichtsensor (81) ein Photodiodenarray oder ein CCD-Array aufweist.

7. Vorrichtung nach Anspruch 1, **dadurch gekennzeichnet, daß** der Dichtesensor (80, 81) mindestens die folgenden Einrichtungen aufweist:
- eine CCD-Kamera (90), die ein Bild der Blattkanten des Stapel (10) erzeugt.

8. Verfahren zum Vereinzeln von Blattgut, wie z. B. Banknoten, aus einem Stapel (10), bei dem
- der Stapel (10) auf eine Andruckplatte (20) gelegt wird,
- der Stapel (10) mittels der Andruckplatte (20) einer Abzugseinrichtung (30) zugeführt wird,
- die Abzugseinrichtung (30) jeweils das oberste Blatt des Stapels (10) vereinzelt,
**dadurch gekennzeichnet, daß**
- die Dichte des Stapels (10) zumindest im Bereich der Abzugseinrichtung (30) kontinuierlich während der Vereinzelung bestimmt, die als Maß für den Anpreßdruck des Blattguts an die Abzugseinrichtung (30) dient, und daß
- der Abstand (D) zwischen der Andruckplatte (20) und der Abzugseinrichtung (30) in Abhängigkeit der bestimmten Dichte so angepaßt wird, daß der Stapel (10) während der Vereinzelung mit einem konstanten Anpreßdruck an die Abzugseinrichtung (30) angedrückt wird.

9. Verfahren nach Anspruch 8, **dadurch gekennzeichnet, daß** zur Bestimmung der Dichte des Stapels (10) mindestens die folgenden Schritte durchgeführt werden:
- zwischen die Blätter des Stapels (10) wird Luft eingeblasen, so daß die Blätter des Stapels (10) zu Schwingungen anregt werden,
- die durch die Schwingungen der Blätter des Stapels (10) erzeugten Geräusche werden detektiert und
- aus den detektierten Geräuschen wird die Dichte des Stapels (10) bestimmt.

10. Verfahren nach Anspruch 8, **dadurch gekennzeichnet, daß** zur Bestimmung der Dichte des Stapels (10) mindestens die folgenden Schritte durchgeführt werden:
- zwischen die Blätter des Stapels (10) wird Luft eingeblasen,
- der Druck der durch den Stapel (10) transmittierten Luft wird detektiert und
- aus dem detektierten Druck wird die Dichte des Stapels (10) bestimmt.

11. Verfahren nach Anspruch 8, **dadurch gekennzeichnet, daß** zur Bestimmung der Dichte des Stapels (10) mindestens die folgenden Schritte durchgeführt werden:
- die Blätter des Stapels (10) werden seitlich mit Licht beleuchtet,
- das durch den Stapel (10) transmittierte Licht wird detektiert und
- aus dem detektierten Licht wird die Dichte des Stapels (10) bestimmt.

12. Verfahren nach Anspruch 8, **dadurch gekennzeichnet, daß** zur Bestimmung der Dichte des Stapels (10) mindestens die folgenden Schritte durchgeführt werden:
- von den Blattkanten des Stapels (10) wird ein Bild erzeugt,
- aus dem Bild wird durch Abzählen die Anzahl der Blattkanten bestimmt,
- aus der Anzahl der Blattkanten wird die Dichte des Stapels (10) bestimmt.

## Claims

1. An apparatus for singling sheet material, such as bank notes, from a stack, having a movable pressure plate on which the stack rests and by means of which the stack is supplied to a picking device which singles the uppermost sheet of the stack in each case, **characterized in that**
a density sensor (50, 60, 70, 80, 81) is provided for determining the density of the stack (10) at least in the area of the picking device (30) continuously during singling, said density serving as a measure of the pressure of the sheet material against the picking device (30), and
a control device (21) is provided for controlling the distance (D) between the pressure plate (20) and the picking device (30) in accordance with the determined density in such a way that the stack (10) is pressed against the picking device (30) with a constant pressure during singling

2. An apparatus according to claim 1, **characterized in that** the density sensor (50, 60) has at least the following devices:
an air blast nozzle (50) for blowing air between the sheets of the stack (10) and causing the sheets of the stack (10) to oscillate, and
a microphone (60) for detecting the noise caused by the oscillations of the sheets of the stack (10).

3. An apparatus according to claim 1, **characterized in that** the density sensor (50, 70) has at least the following devices:
an air blast nozzle (50) for blowing air between the sheets of the stack (10) on one side of the stack (10), and
an air pressure sensor (70) for detecting the pressure of the air passing through the stack (10) on the opposite side of the stack (10).

4. An apparatus according to claim 1, **characterized in that** the density sensor (80, 81) has at least the following devices:
a light source (80) for illuminating the stack (10) on one side, and
a light sensor (81) for detecting the light passing through the stack (10) on the opposite side of the stack (10).

5. An apparatus according to claim 4, **characterized in that** the light source (80) has an LED array.

6. An apparatus according to claim 4, **characterized in that** the light sensor (81) has a photodiode array or a CCD array.

7. An apparatus according to claim 1, **characterized in that** the density sensor (80, 81) has at least the following devices:
a CCD camera (90) for producing an image of the sheet edges of the stack (10).

8. A method for singling sheet material, such a bank notes, from a stack, wherein the stack (10) is placed on a pressure plate (20),
the stack (10) is supplied by means of the pressure plate (20) to a picking device (30),
the picking device (30) singles the uppermost sheet of the stack (10) in each case,
**characterized in that**
the density of the stack (10) is determined at least in the area of the picking device (30) continuously during singling, said density serving as a measure of the pressure of the sheet material against the picking device (30), and
the distance (D) between the pressure plate (20) and the picking device (30) is adjusted in accordance with the determined density in such a way that the stack (10) is pressed against the picking device (30) with a constant pressure during singling

9. A method according to claim 8, **characterized in that** for determining the density of the stack (10) at least the following steps are performed:
blowing air between the sheets of the stack (10) so that the sheets of the stack (10) are caused to oscillate,
detecting the noise produced by the oscillations of the sheets of the stack (10), and
determining the density of the stack (10) from the detected noise.

10. A method according to claim 8, **characterized in that** for determining the density of the stack (10) at least the following steps are performed:
blowing air between the sheets of the stack (10),
detecting the pressure of the air transmitted through the stack (10), and
determining the density of the stack (10) from the detected pressure.

11. A method according to claim 8, **characterized in that** for determining the density of the stack (10) at least the following steps are performed:
illuminating the sheets of the stack (10) laterally with light,
detecting the light transmitted through the stack (10), and
determining the density of the stack (10) from the detected light.

12. A method according to claim 8, **characterized in that** for determining the density of the stack (10) at least the following steps are performed:
producing an image of the sheet edges of the stack (10),
determining the number of sheet edges from the image by counting, and
determining the density of the stack (10) from the number of sheet edges.

## Revendications

1. Dispositif de déliassage de papier valeur, comme par exemple les billets de banque, provenant d'une pile avec un cadre presseur mobile, sur lequel la pile est posée et au moyen duquel la pile est amenée à un dispositif d'extraction, qui déliasse à chaque fois la feuille la plus haute de la pile, **caractérisé en ce qu'**il est muni d'un capteur de densité (50, 60, 70, 80, 81), qui évalue en continu au moins dans la zone du dispositif d'extraction (30) la densité de la pile (10) durant le déliassage, qui sert de mesure pour le serrage des papiers valeurs au niveau du dispositif d'extraction (30),
et **en ce qu'**il est muni d'un dispositif de régulation (21), qui régule l'écart (D) entre le cadre presseur (20) et le dispositif d'extraction (30) en fonction de la densité déterminée, de sorte que la pile (10) durant le déliassage, soit serrée avec une pression de serrage constante au niveau du dispositif d'extraction (30).

2. Dispositif selon la revendication 1, **caractérisé en ce que** le capteur de densité (50, 60) présente au moins les organes suivants :
- une buse de soufflage d'air (50), qui souffle de l'air entre les feuilles de la pile (10) et qui excite les feuilles de la pile (10) en oscillation ; et
- un microphone (60), qui détecte les bruits générés du fait des oscillations des feuilles de la pile (10).

3. Dispositif selon la revendication 1, **caractérisé en ce que** le capteur de densité (50, 70) comprend au moins les organes suivants :
- une buse de soufflage d'air (50), qui souffle de l'air entre les feuilles de la pile (10) sur un côté de la pile (10) ; et
- un capteur de pression d'air (70), qui détecte du côté opposé de la pile (10) la pression de l'air traversant la pile (10).

4. Dispositif selon la revendication 1, **caractérisé en ce que** le capteur de densité (80, 81) présente au moins les organes suivants :
- une source de lumière (80), qui illumine la pile (10) sur un côté ; et
- un capteur de lumière (81) qui détecte la lumière traversant la pile (10) du côté opposé de la pile (10).

5. Dispositif selon la revendication 4, **caractérisé en ce que** la source de lumière (80) présente une matrice de diode électroluminescente.

6. Un dispositif selon la revendication 4, **caractérisé en ce que** le capteur de lumière (81) présente une matrice de photodiode ou une matrice d'élément photosensible à transfert de charge.

7. Un dispositif selon la revendication 1, **caractérisé en ce que** le capteur de densité (80, 81) présente au moins les organes suivants :
- une caméra à élément photosensible à transfert de charge (90), qui génère une image des arêtes de feuilles de la pile (10).

8. Procédé de déliassage de papiers valeurs, comme par exemple des billets de banque, provenant d'une pile (10), dans lequel :
- la pile (10) est posée sur un cadre presseur (20) ;
- la pile (10) est amenée à un dispositif d'extraction (30) au moyen du cadre presseur (20) ;
- le dispositif d'extraction (30) déliasse à chaque fois la feuille la plus haute de la pile (10),
**caractérisé en ce que** :
- la densité de la pile (10) est estimée en continu au moins dans la zone du dispositif d'extraction (30) durant le déliassage, cette densité servant de mesure pour la pression de serrage des papiers valeurs pour le dispositif d'extraction ;
et **en ce que** :
- l'écart (D) entre le cadre presseur (20) et le dispositif d'extraction (30) est ajusté en fonction de la densité déterminée de sorte que la pile (10) soit pressée avec une pression de serrage constante au niveau du dispositif d'extraction (30) durant le déliassage.

9. Procédé selon la revendication 8, **caractérisé en ce que** au moins les étapes suivantes sont mises en oeuvre pour l'estimation de la densité de la pile (10) :
- soufflage d'air entre les feuilles de la pile (10), de sorte que les feuilles de la pile (10) soient excitées en oscillation ;
- détection des bruits générés par l'oscillation des feuilles de la pile (10) ; et
- estimation de la densité de la pile (10) à partir du bruit détecté

10. Procédé selon la revendication 8, **caractérisé en ce que** au moins les étapes suivantes sont mises en oeuvre pour l'estimation de la densité de la pile (10) :
- soufflage d'air entre les feuilles de la pile (10) ;
- détection de la pression d'air transmis à travers la pile (10) ; et
- estimation de la densité de la pile (10) à partir de la pression détectée.

11. Procédé selon la revendication 8, **caractérisé en ce que** au moins les étapes suivantes sont mises en oeuvre pour l'estimation de la densité de la pile (10):
- illumination latérale des feuilles de la pile (10) avec de la lumière ;
- détection de la lumière transmise à travers la pile (10) ; et
- estimation de la densité de la pile (10) à partir de la lumière détectée.

12. Procédé selon la revendication 8, **caractérisé en ce que** au moins les étapes suivantes sont mises en oeuvre pour l'estimation de la densité de la pile (10) :
- génération d'une image à partir des arêtes des feuilles de la pile (10) ;
- détermination du nombre d'arêtes de feuilles à partir de l'image par décompte ; et
- estimation de la densité de la pile (10) à partir du nombre d'arêtes de feuilles.
